# EUROPEAN PATENT APPLICATION

(11) **EP 0 998 050 A2**
(43) Date of publication of application: **03.05.2000**
(21) Application number: 99660163.9
(22) Date of filing: 20.10.1999
(51) Int. Cl.: H04B 1/30

(54) **A method and an arrangement for receiving a frequency modulated and a digitally modulated signal in a mobile station**

(30) Priority: 27.10.1998 FI 982328
(71) Applicant: NOKIA MOBILE PHONES LTD., 02150 Espoo (FI)
(72) Inventor: Väisänen, Risto, 24100 Salo (FI)
(74) Representative: Levlin, Jan Markus

(57) **Abstract**

The invention relates to a method and an arrangement for receiving a frequency modulated and a digitally modulated signal in a mobile station. According to the invention both signal modes are received by direct conversion. Thus the arrangement according to the invention comprises one combined direct conversion receiver for receiving both signal modes. Most preferably the combined direct conversion receiver comprises a common section (55) for the signal modes, a section (56A, 56B) for the digitally modulated signal, and a section (57) for the frequency modulated signal. For the processing of the frequency modulated signal there is most preferably used a demodulator (53) which comprises two branches comprising pulse detectors, where the first branch detects the rising edge of the signal and the second branch detects the falling edge of the signal.

## Description

The object of the invention is a method and an arrangement for receiving a frequency modulated and a digitally modulated signal advantageously in a mobile station.

There are known dual mode receivers which are realised by intermediate frequency techniques (superheterodyne). When intermediate frequency techniques are used the received radio frequency signal is mixed to a lower frequency by using one or more intermediate frequencies. Dual mode receivers provide a digital in-phase signal I and a digital quadrature signal Q with a phase shift of 90°.

A problem in the known devices receiving a frequency modulated and a digitally modulated signal is the generally used intermediate frequency technique, which is not so advantageous as the direct conversion techniques currently becoming more commonplace. The direct conversion technique or the zero intermediate frequency technique means here the use of one frequency mixing step for converting the received modulated signal into I/Q signals having a sufficiently low frequency for the low-pass filters then used in the channel filtering.

The object of the invention is to present a solution for the dual operating mode which is more efficient than that provided by an intermediate frequency solution.

The objects are attained by combining an analogue section to a digital receiver operating by the principle of direct conversion or zero intermediate frequency, and utilising as much existing techniques as possible.

The invention relates to a method for receiving a frequency modulated and a digitally modulated signal in a mobile station. According to the invention both signal modes are received by direct conversion. Most advantageously the operation is such that both signal modes are initially processed in a common manner, then the digitally modulated signal is processed in a manner of its own and the frequency modulated signal is processed in a manner of its own.

The invention relates also to an arrangement for receiving a frequency modulated and a digitally modulated signal in a mobile station. According to the invention it comprises one direct conversion receiver for receiving both signal modes. Most advantageously the direct conversion receiver for receiving both signal modes comprises:
- a common section for both signal modes;
- a section for the digitally modulated signal; and
- a section for the frequency modulated signal.

According to the invention it is possible to use a common section which already exists in receivers according to the direct conversion technique, by adding an analogue section in parallel with the digital section, after the filtering and amplification which is made after the mixing. The digital signal path and the analogue signal path can be selected with separate change-over switches or by controlling the power supply to the components. This offers the advantages of the direct conversion technique and also enables the reception of a frequency modulated signal. Further this provides essential savings regarding the costs of filters, synthesisers and semiconductors, for instance. The required parts can be advantageously manufactured on an integrated circuit. Thus also the space required by a device according to the invention is smaller. Further savings are achieved according to the invention in that there are not required any change-over switches operating at high frequencies, which otherwise are required in an FM receiver but difficult to realise. Preferred embodiments of the invention are presented in the dependent claims.

The invention is described in detail below with reference to the enclosed drawing, in which
- Figure 1: shows in a block diagram a known general principle of a mixer attenuating the mirror frequency;
- Figure 2: shows a method according to the invention as a flow diagram;
- Figure 3: shows an arrangement according to the invention in a block diagram;
- Figure 4: shows block diagrams of some demodulators according to the invention;
- Figure 5: shows a signal diagram of a demodulator according to figure 4; and
- Figure 6: shows in a flow diagram the operation of the demodulators according to figure 4.

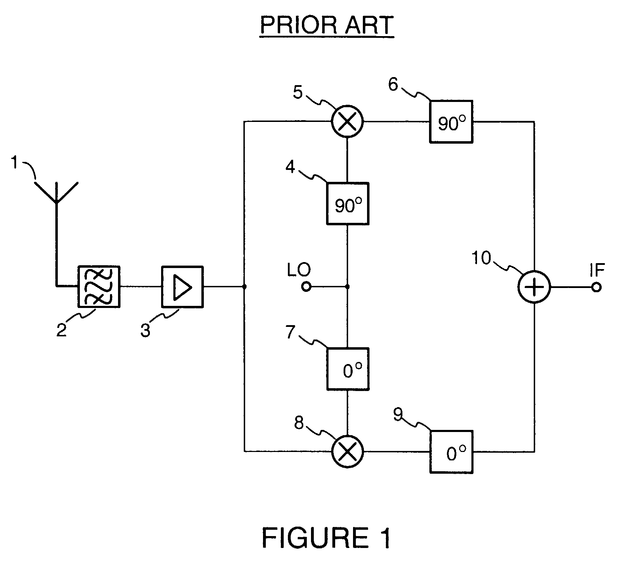

Figure 1 shows the block diagram of a mixer which attenuates the mirror frequency and which is intended to receive a frequency modulated signal. The signal received by the antenna 1 is filtered with the band-pass filter 2 and amplified in the amplifier 3. The local oscillator signal LO is phase shifted 90° in the block 4 and mixed in the mixer 5 with the upper branch of said amplified signal. The mixing result is then phase shifted 90° in the block 6. The local oscillator signal LO is figuratively phase shifted 0° in the block 7 and mixed in the mixer 8 to the lower branch of said amplified signal. The mixing result is then figuratively phase shifted 0° in the block 9. The phase shifted signals obtained as the mixing results are added in the block 10 to form the intermediate frequency IF.

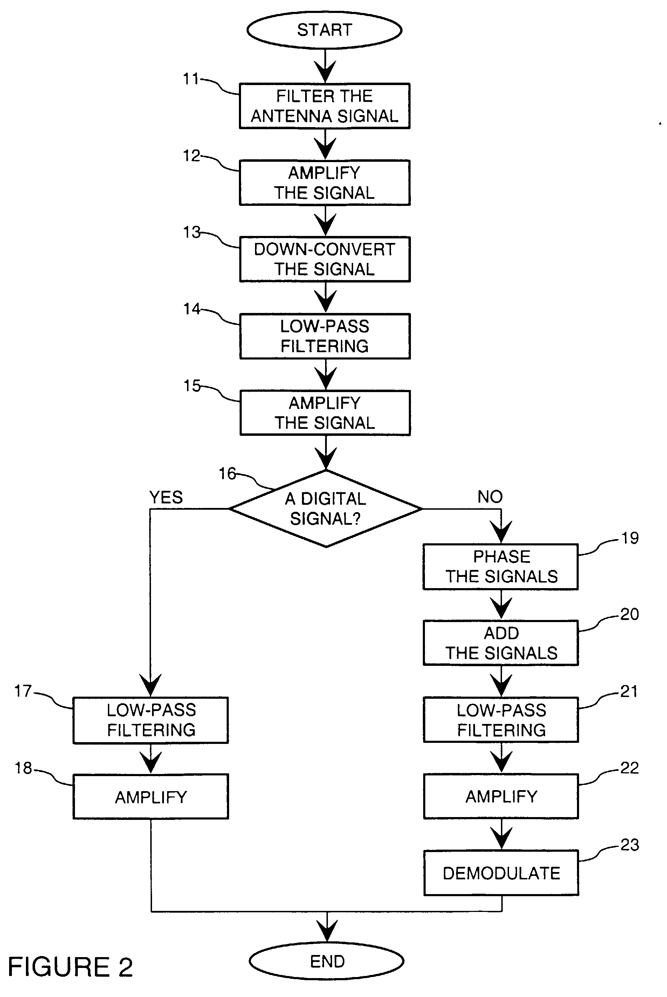

Figure 2 shows the flow diagram of a method according to the invention for receiving a frequency modulated and a digitally modulated signal. A signal received by the antenna is filtered 11 with a band-pass filter and amplified 12. The amplified signal is down-converted 13 in two branches in correspondence with the local oscillator signals phase shifted 0° and 90°, respectively. The signals of both branches are low-pass filtered 14 and amplified 15.

Then there is selected 16 the reception of a digitally modulated signal or of a frequency modulated signal. The digitally modulated signal is received as the prior art manner so that it is low-pass filtered 17 and amplified 18 in both branches, and correspondingly there are obtained the I (in-phase) and Q (quadrature) signals. From this point on the frequency modulated signal is received in a manner according to the invention so that the following steps are performed, after the previous method steps common to both signal modes, and instead of the reception steps for a digitally modulated signal. First the signals are phased 19 in both branches by shifting the signal phases 0° and 90°, respectively. The phase shifted signals are added 20 into a single signal which is low-pass filtered 21, amplified 22 and demodulated 23. This produces the detected low frequency signal.

The flow diagram shows only the alternative reception of either the digitally modulated signal or the frequency modulated signal, but in principle it is also possible to receive both signal modes simultaneously.

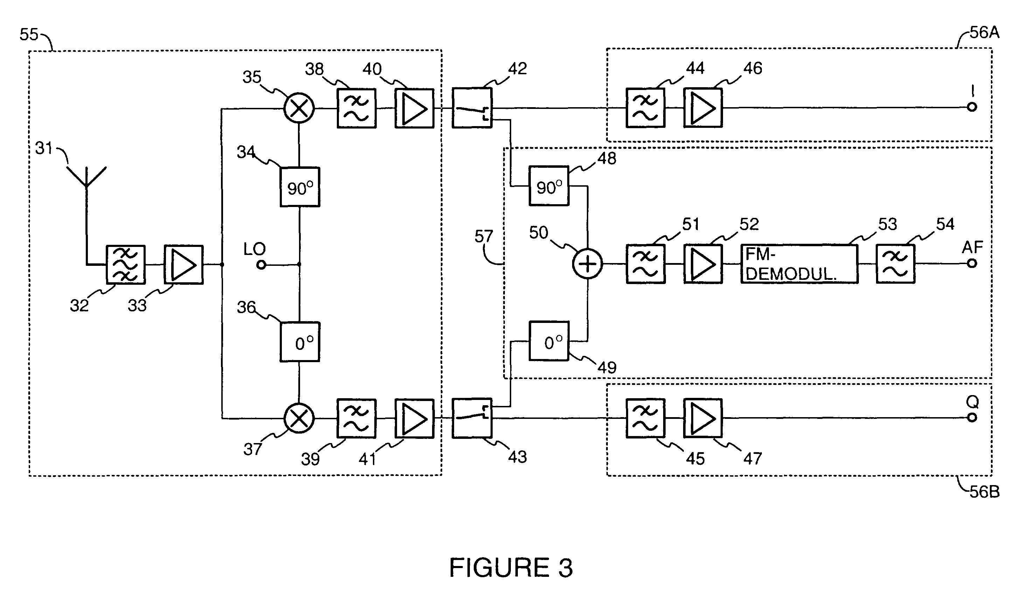

Figure 3 shows in a block diagram those parts of a receiver arrangement according to the invention which are essential to the invention. A signal received by the antenna 31 is supplied via the band-pass filter 32 and the amplifier 33 to the mixers 35, 37 in two respective branches. The mixers 35, 37 receive the local oscillator signal LO from the phase shifting means 34, 36 which shift the signal phase by 90° and 0°, respectively. The signals of both branches are further directed via the low-pass filters 38, 39 and the amplifiers 40, 41 to the change-over switches 42, 43, which select the reception of either the digitally modulated or the frequency modulated signal. The above mentioned components 31 to 41 until the change-over switches 42, 43 can be realised in a prior art manner, and they form the section 55 defined by the broken lines. However, the change-over switches 42, 43 are not necessary, but instead of them it is possible to use fixed signal connections and power switching of the components in the digital or analogue signal path, but this may cause noise or other interference.

When the reception of the digitally modulated signal is selected, as shown as an example in the figure, the signals are directed in both branches to the low-pass filters 44, 45 and further to the amplifiers 46, 47, which supply the digital modulated signals I and Q in the sections 56A, 56B defined by the broken lines.

When the reception of the frequency modulated signal is selected, then the signals are directed in both branches 90° and 0° to the phase shift means 48, 49 and to the adder 50. The added signal is further supplied via the low-pass filter 51 and the limiting amplifier 52 to the demodulator 53 of the FM (frequency modulated) signal. The demodulated signal is low-pass filtered by the filter 54 which produces the analogue low frequency signal AF. The components required to process the frequency modulated signal according to the invention are defined by broken lines in the section 57.

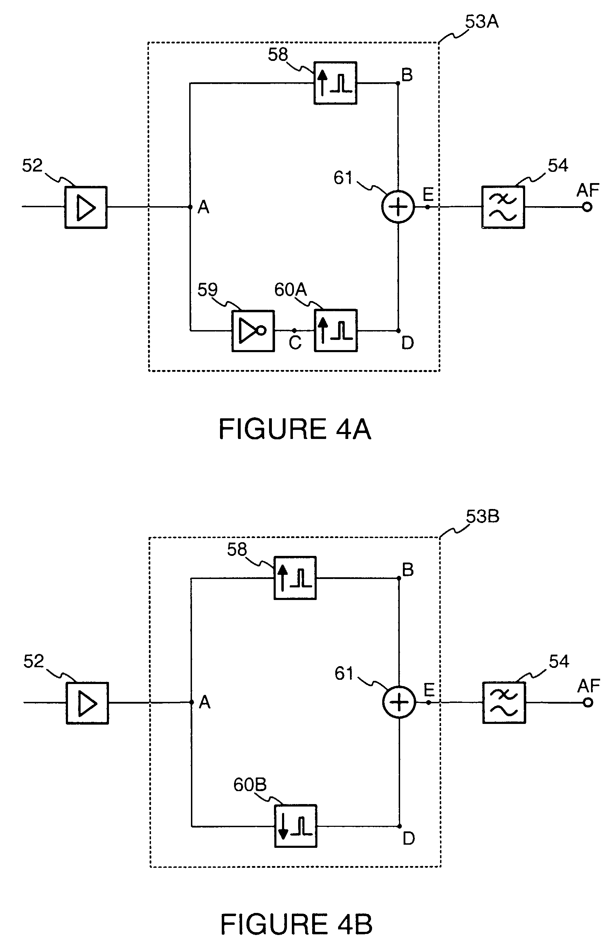

Figure 4A shows a block diagram which among other things contains a demodulator 53A according to the invention based on pulse detectors. The block 53A within the broken lines corresponds to the FM demodulator block 53 of figure 3. For the sake of clarity the block diagram also shows an amplifier 52 and a low-pass filter 54. The frequency modulated signal is connected from the amplifier 52 to the point A of the demodulator 53A, from where the signal is branched into the upper and lower branches. In the upper branch the signal is detected by the pulse detector 58 to the point B. In the lower branch the signal is inverted by the inverter 59 to the point C, and then it is detected by the pulse detector 60, whereby a detection of the falling edges of the pulses from the signal at point A is obtained at the point D. The pulse detectors 58, 60A form from the rising signal edge a pulse, which has a standard height and a width in time and which most preferably is shorter than the signal pulse to be detected. The detected rising and falling edges of the signal at point A are obtained at points B and D, from where they are added by the adder 61 to the point E. The demodulation is finished with a low-pass filter 54 to the output AF.

Figure 4B shows another block diagram which contains among other things another more advantageous demodulator 53B according to the invention, which is based on pulse detectors. The block 53B defined by broken lines corresponds to the FM demodulator block 53 of figure 3. For the sake of clarity also this block diagram shows an amplifier 52 and a low-pass filter 54. The frequency modulated signal is connected from the amplifier 52 to the point A of the demodulator 53B, from where the signal is branched into the upper and lower branches. In the upper branch the signal is detected by the pulse detector 58 to the point B. In the lower branch the signal is detected as such, at the falling edge, by the pulse detector 60B to the point D. The pulse detector 58 of the upper branch forms from the rising signal edge, and the pulse detector 60B of the lower branch forms from the falling signal edge, a pulse which has a standard height and a width in time and which most preferably is shorter than the signal pulse to be detected. The detected rising and falling edges of the signal at point A are obtained at points B and D, from where they are added by the adder 61 to the point E. The demodulation is finished with a low-pass filter 54 to the output AF.

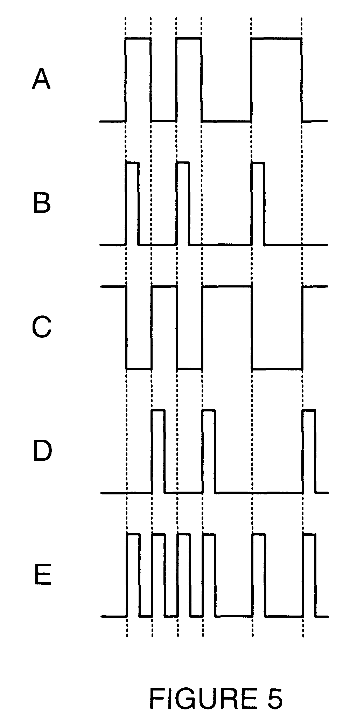

Figure 5 shows a signal diagram from the observation points A, B, C, D, E of a demodulator according to figure 4 based on pulse detectors. The signal diagram A shows the signal at the point A which is supplied to the demodulator. The signal diagram B shows the pulse detection result at point B in the upper branch. The signal diagram C shows the inverted signal at point C in the lower branch, and the signal diagram D shows the pulse detection result of the inverted signal at point D in the lower branch. The signal diagram E shows the sum of the signals processed in the upper and lower branches at the point E. The upper branch detects the rising edge of the signal supplied to the demodulator, and the lower branch as a whole detects the falling edge. The low-pass filtered sum forms the detected signal obtained from the supplied frequency modulated signal.

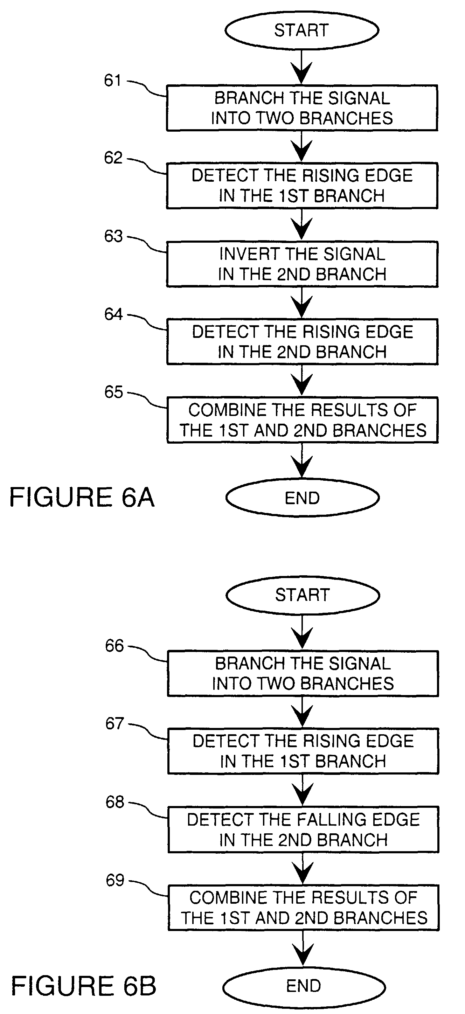

Figure 6A shows the operation of the demodulator according to figure 4A as a block diagram. The modulated signal is demodulated in the following way: the modulated signal is divided 61 into two branches, the first one for detecting the rising edge of the signal and the second one for detecting the falling edge of the signal; the rising edge of the modulated signal is detected 62 in the first branch; the modulated signal is inverted 63 and the rising edge of the inverted modulated signal is detected 64 in the second branch; and the signals processed in the first and second branches are combined 65.

Figure 6B shows the operation of the demodulator according to figure 4B in a block diagram. The modulated signal is demodulated in the following way: the modulated signal is divided 66 into two branches, the first one for detecting the rising edge of the signal and the second one for detecting the falling edge of the signal; the rising signal edge is detected 67 in the first branch; the falling edge of the signal is detected 68 in the second branch; and the signals processed in the first and second branches are combined 69.

Next we examine as an example the reception of an FM signal with a combined direct conversion receiver for a digitally modulated and a frequency modulated signal. The FM radio signal is converted into an electrical signal by the antenna 31. The electrical signal is filtered in the band-pass filter 32 and amplified in the amplifier 33. The amplified signal is further processed, in the same way as the digitally modulated signal, in two branches with the mixers 35, 37. A local oscillator signal LO is supplied to the mixers 35, 37 via the phase shift means 34, 36, which shift the signal phase by 90° and 0°, respectively. The signals of both branches are further supplied via the low-pass filters 38, 39 and the amplifiers 40, 41 to the change-over switches 42, 43, which switch the signal to the analogue section 57 when an FM signal is received. The above mentioned components 31 to 41 until the change-over switches 42, 43 form the section 55, and they can be realised in a manner according to the direct conversion techniques, even if they in this example process a frequency modulated signal. However, because the change-over switches 42, 43 are not necessary, it is possible to use instead of them fixed signal connections and power switching of the components 44, 45, 46, 47, 56A, 56B performing here the continued processing in the signal path of the digitally modulated signal.

According to this example the frequency modulated signal is further processed in both branches in the 90° and 0° phase shift means 48, 49 and in the adder 50. The combined signal is further supplied via the low-pass filter 51 and the amplifier 52 to the demodulator 53 of the frequency modulated signal FM (frequency modulation). According to the example the demodulation is performed in the two branches with the aid of pulse detectors 58, 60, of which one branch inverts the signal before detection, and the branches are combined after the detection. The demodulated FM signal is low-pass filtered by the filter 54, and an analogue signal AF is obtained.

A frequency modulated signal means a modulated signal where the modulation is made by causing either a direct or indirect effect on the frequency of the carrier. For instance the following modulation methods are used for frequency modulation: FM (Frequency Modulation), NBFM (Narrow Band Frequency Modulation), PM (Phase Modulation), NBPM (Narrow Band Phase Modulation), FSK (Frequency Shift Keying), and FFSK (Fast Frequency Shift Keying). In phase modulation (PM) the frequency is momentarily changed in order to change the phase of the signal.

A digitally modulated signal means a signal modulated particularly by other modulation methods than the methods presented above for frequency modulation, and particularly it means a digitally modulated signal which for reception requires the digital section of the presented arrangement.

The embodiment is not presented in more detail here, because a person skilled in the art is able to realise the solution according to the invention on the basis presented above.

The invention is not limited to relate only to the embodiment examples presented above, but many modifications are possible within the inventive idea defined in the claims. Particularly it must be noted that the invention can be applied in many operating environments, such as in the systems GSM, NMT (Nordic Mobile Telephone), UNITS (Universal Mobile Telecommunications System), AMPS (Advanced Mobile Phone System), and DCS (Digital Cellular System).

## Claims

1. A method for receiving a frequency modulated and a digitally modulated signal in a mobile station, **characterised** in that both signal modes are received by direct conversion.

2. A method according to claim 1, **characterised** in that both signal modes are first processed in a common manner, then the digitally modulated signal is processed in its own manner, and the frequency modulated signal is processed in its own manner.

3. A method according to claim 2, **characterised** in that the common processing of the signal modes includes at least the following method steps:
- an antenna signal is filtered with a band-pass filter;
- the signal is amplified;
- the signal is down-converted at least in two branches with phase shifted signals of a local oscillator for forming at least two down-converted signals;
- said at least two down-converted signals are low-pass filtered for forming at least two low-pass filtered signals; and
- said low-pass filtered signals are amplified for forming at least two amplified signals.

4. A method according to claim 3, **characterised** in that the processing of the frequency modulated signal includes at least the following method steps:
- said amplified signals are phased for forming at least two phased signals;
- said phased signals are summed into one signal for forming a summed signal; and said summed signal is
- low-pass filtered;
- amplified; and
- demodulated.

5. A method according to claim 4, **characterised** in that the demodulation of the frequency modulated signal includes at least the following method steps:
- the modulated signal is branched into a first branch for detecting the rising edge of the signal, and into a second branch for detecting the falling edge of the signal;
- the rising edge of the modulated signal is detected in the first branch;
- the modulated signal is inverted and the rising edge of the inverted signal is detected in the second branch; and
- the signals processed in the first and second branches are combined.

6. A method according to claim 4, **characterised** in that the demodulating of the frequency modulated signal includes at least the following method steps:
- the modulated signal is branched into a first branch for detecting the rising edge of the signal, and into a second branch for detecting the falling edge of the signal;
- the rising edge of the modulated signal is detected in the first branch;
- the falling edge of the modulated signal is detected in the second branch; and
- the signals processed in the first and second branches are combined.

7. A method according to claim 2, **characterised** in that alternatively either the signal path of the digitally modulated signal or the frequency modulated signal is used.

8. An arrangement for receiving a frequency modulated and a digitally modulated signal in a mobile station, **characterised** in that it comprises one direct conversion receiver for receiving both signal modes.

9. An arrangement according to claim 8, **characterised** in that the direct conversion receiver for receiving both signal modes comprises:
- a common section for the signal modes;
- a section for the digitally modulated signal; and
- a section for the frequency modulated signal.

10. An arrangement according to claim 9, **characterised** in that the common section for the signal modes comprises mixers and 0° and 90° phase shifting means for mixing the signals in at least two branches with the signal of a local oscillator.

11. An arrangement according to claim 9, **characterised** in that the section for the frequency modulated signal comprises and 0° and 90° phase shifting means, an adder and a demodulator for the frequency modulated signal.

12. An arrangement according to claim 11, **characterised** in that the demodulator for the frequency modulated signal comprises two branches, of which the upper branch comprises a pulse detector for detecting the rising edge of the frequency modulated signal to be demodulated, and of which the lower branch comprises an inverter and a pulse detector connected in series for detecting the falling edge of the frequency modulated signal to be demodulated, and an adder combining the branches.

13. An arrangement according to claim 11, **characterised** in that the demodulator for the frequency modulated signal comprises two branches, of which the upper branch comprises a pulse detector for detecting the rising edge of the frequency modulated signal to be demodulated, and of which the lower branch comprises a pulse detector active at the falling edge of the signal for detecting the falling edge of the frequency modulated signal to be demodulated, and an adder combining the branches.

14. An arrangement according to claim 9, **characterised** in that it further comprises switches for switching the signal processed by the section which is common to both signal modes into the section for the digitally modulated signal or into the section for the frequency modulated signal, in order to receive a signal of the respective type.
